# EUROPEAN PATENT APPLICATION

(11) **EP 3 831 795 A1**
(43) Date of publication of application: **09.06.2021**
(21) Application number: 19765821.4
(22) Date of filing: 29.07.2019
(51) Int. Cl.: C04B 28/08, C04B 28/10, C04B 40/02

(54) **PROCESS FOR OBTAINING CAO-MGO BINDERS AND CONSTRUCTION PRODUCTS WITH REUSE OF SUBPRODUCTS AND/OR RESIDUES AND ABSORPTION OF CARBON DIOXIDE**

(30) Priority: 01.08.2018 PT 2018110895
(71) Applicant: Universidade Da Beira Interior, 6201-001 Covilhã (PT)
(72) Inventor: DE CASTRO GOMES, João Paulo, 6200-906 Teixoso (PT); SILVA HUMBERT, Pedro, 6200-379 Covilhã (PT)
(74) Representative: Monteiro Alves, Inês
(86) International application number: PCT/PT2019/050020
(87) International publication number: WO 2020/027674

(57) **Abstract**

The present invention is related to the process of obtaining CaO-MgO binders and construction products, with reuse of subproducts and/or residues and carbon dioxide, by compression molding (6). The binders are produced by crushing and grinding. The process of manufacturing the products consists of mixing binders and subproducts and/or residues with residual non-potable water (5), and curing this mixture with carbon dioxide (7), under constant humidity, temperature and pressure conditions. The process of hardening is carried out by recirculating carbon dioxide in a closed circuit, followed by drying of the products (12). The subproducts and/or residues contain calcium and magnesium and may be slag from the steel manufacturing industry or sand and mud resulting from the pulp, paper and cardboard production industry. The construction products may include other residues and materials containing silica and aluminum.

## Description

### Field of the invention

The present invention pertains to the civil construction industry, namely the development, production and application of construction materials.

### Summary of the invention

The present invention pertains to the development of CaO-MgO binders and construction products, essentially comprising subproducts and/or residues rich in calcium and magnesium, which harden with the absorption of carbon dioxide, under constant ambient conditions of humidity, temperature and pressure. The CaO-MgO binders, containing high content of reactive CaO and/or MgO, are obtained by crushing and fine grinding the subproducts and/or residues. The construction products are obtained by molding and compression of the mixture of binders with subproducts and/or residues having different granulometry and residual non-potable water. The process of hardening is carried out by recirculating carbon dioxide in a closed circuit, followed by drying the products. The construction products may include other residues and materials containing silica and aluminum.

The binders and products comprised of subproducts and/or residues rich in calcium and magnesium and hardened with absorption of carbon dioxide have superior mechanical resistance to equivalent construction products obtained with Portland cement. The manufacturing process of the products does not require the use of potable water as in obtaining equivalent construction products produced with Portland cement. Accordingly, the objective of the present invention is to partially or fully replace the use of Portland cement, besides reducing or eliminating the use of potable water, in the production of civil construction materials.

The time required for total hardening of the products, obtained with the absorption of carbon dioxide in the mixtures of subproducts and/or residues, is ten times lower than the time needed for hardening equivalent construction products produced with Portland cement. Therefore, the present invention is useful for accelerating the process of producing construction materials.

The process of obtaining CaO-MgO binders and construction products with reuse of subproducts and/or residues and carbon dioxide can be used in the production of all and any type of construction product for structural and non-structural applications, containing Portland cement or other types of binders, replacing them partially or fully.

Therefore, the present invention is useful for the entire civil construction industry by reducing the need to use cement, sand and natural gravel, and the consumption of potable water in the civil construction industry, reducing the disposal of subproducts, residues and carbon dioxide into the environment, accelerating the speed of production and increasing the mechanical resistance of the civil construction materials, besides contributing to the Circular Economy and objectives of Sustainable Development. This invention can be applied in the production of all types of civil construction products, namely composite materials that use a binder in the mixture, such as, for example, cement, partially or fully replacing it.

### State of the art

The absorption of carbon dioxide in certain materials containing namely calcium or magnesium, also referred to as carbonation, is a chemical process that occurs in porous media, with humidity on the inside, when subject to an air environment containing carbon dioxide (CO₂), giving rise to carbonates as products of this reaction. For example, in Portland cement concrete, the carbonation results from the reaction of calcium hydroxide with the carbon dioxide from the air, forming calcium carbonate and water.

Carbonation is a natural process which may occur over several years, since the concentration of CO₂ in our atmosphere is low. However, the carbonation reaction process can be accelerated in an environment with high CO₂ content, which enables the residues or subproducts rich in calcium and magnesium, when mixed with any liquid, to produce the carbonates in an accelerated manner, causing a significant increase in the mechanical resistance of the mixture and enabling the production of binders and construction products.

In this regard, reference is made, for example, to the study by *Humbert, P. and Castro-Gomez, J.P.* (2018) published recently, about the potential and challenges of the development and use of a free binder of Portland cement activated by carbon dioxide. In this investigative work it was used an electric furnace slag of Siderurgia Nacional, rich in calcium and magnesium, which was ground to a size less than 45 µm, compacted and subject to carbonation in an environment containing 100% of carbon dioxide for 72 hours. After this period, it was found that the activated binder obtained compression resistance results between 69 and 74 MPa, making it possible to characterize this material as a potential replacement for Portland cement for structural purposes, whether for pre-fabricated constructive elements or structures made of normal or high-strength concrete, molded *in situ.* The potential benefits for the environment, the challenges of applying and integrating the product on the market, as well as future research necessary for studying the economic viability of production on an industrial scale of this new technology, were also discussed in this work [1]. The present invention differs from this study in that it allows the binders to be mixed with subproducts or residues having different granulometry and the use of residual non-potable water. Moreover, the binders and construction products may include other residues and materials containing silica and aluminum.

Patent US20170073270A1 discloses a binder composed of steel slag and water, activated by CO₂, which may comprise a single type or a mixture of various different types of steel slag. Whereas in the present invention the binders and construction products can be obtained with any type of industrial residue rich in calcium or magnesium, and also does away with the need to use potable water and rather residual water coming from processes, non-potable water in general or sea water. This enables the reuse and correct valuation of a wider range of subproducts and residues that are intended to be disposed of in landfills or subjected to treatments with a view to recycling.

The same document US20170073270A1 discloses that the slag is mixed with glass recycled from fluorescent lamps and discloses a thermal treatment to enhance the performance of a certain type of slag, whereas the present invention uses crushed glass recycled from soft drink bottles and other drinks or other types of glass residues. Additionally, in the present invention it is possible to use alcohol, sodium chloride and sodium bicarbonate, as additives in the mixtures of the binders with subproducts or residues having different granulometry, enabling an increase in the process of gain in resistance of the construction products, any thermal treatment being dispensable, and without any type of additional power usage.

Document US20170073270A1 also discloses that in finalizing the curing process, the products are removed from the carbonation chamber, not being concerned with the residual CO₂ contained in said chamber and, accordingly, since it refers to a technology that captures CO₂, its potential for reducing carbon dioxide emissions is restricted, whereas the present invention envisages the use of a vacuum pump to remove the residual CO₂ from inside the chamber and store it temporarily in a secondary reservoir destined for residual CO₂, which constitutes a closed circuit of CO₂. Put otherwise, the process of hardening can be carried out by recirculating carbon dioxide in a closed circuit, followed by drying the products. It is thus possible to increase further the negative balance of CO₂ emissions throughout the industrial process.

Patent US20170073270A1 discloses the heating of CO₂ at the point of injecting it into the carbonation chamber and the performance of additional curing with water whereas the present invention discloses a carbonation chamber and a complementary curing chamber, both with controlled temperature. A perceptible increase in the process of gain in resistance of the construction products is thus made possible.

### General description of the invention

The present invention refers to obtaining CaO-MgO binders and the production of construction products composed of subproducts and/or residues rich in calcium and/or magnesium, including non-potable water (residual, from the sea or polluted river), additives (sodium chloride, sodium bicarbonate or alcohol) and materials containing silica and aluminum (such as crushed glass) the hardening being carried out by the absorption of carbon dioxide, and which are obtained by molding and compression.

The production of the CaO-MgO binder is obtained by mechanical treatment (crushing, grinding and pulverization) and by separation (sifting) of the subproducts and/or residues so as to select only the finest sizes performing better in the carbonation reaction sufficient for hardening the products.

The construction products are obtained by mixing a CaO-MgO binder with additives, aggregates (of natural or residual origin) and/or subproducts/residues, with different sizes, and non-potable water, and may also contain Portland cement, the production thereof being carried out by compression molding or vibro-compression, followed by absorption of carbon dioxide in an environment with high concentration, under controlled humidity, temperature and pressure conditions. After carbonation of the products, they undergo a drying process, and the residual carbon dioxide of the system is stored in a secondary reservoir included in a system of recirculation of carbon dioxide in a closed circuit.

The compression molding of the mixture should be done according to the characteristics of the end product, which may be any pre-molded or pre-fabricated element with applications in civil construction.

### Description of the Drawings

Ahead is a detailed description of the drawings relating to the process of obtaining CaO-MgO binders and construction products with reuse of subproducts and/or residues, with absorption of carbon dioxide.

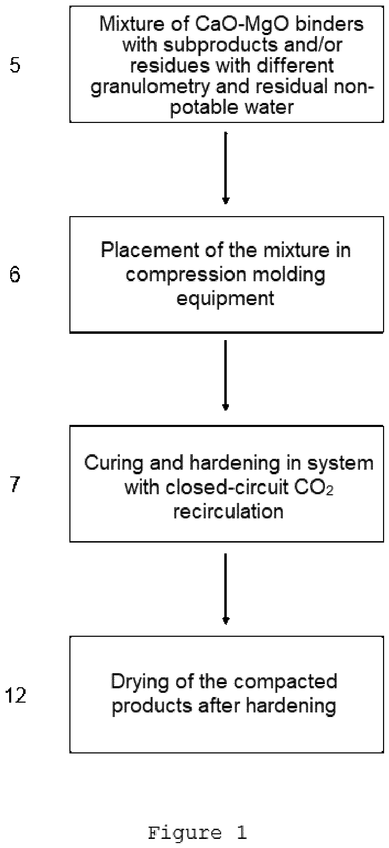

**Figure 1****:** Schematic representation of the general process of obtaining construction products with reuse of subproducts and/or residues and absorption of carbon dioxide.
   Wherein (5) represents a dosage and mixture of binders and residues and/or subproducts with different granulometry, with different traces, and with non-potable water in varying amounts.
   Wherein (6) represents the process of molding and compression of the mixture, for example by vibro-compression, for obtaining a certain product.
   Wherein (7) represents the curing and hardening system with absorption of carbon dioxide of the molded and compacted products.
   Wherein (12) represents the step of drying the compacted product after hardening.

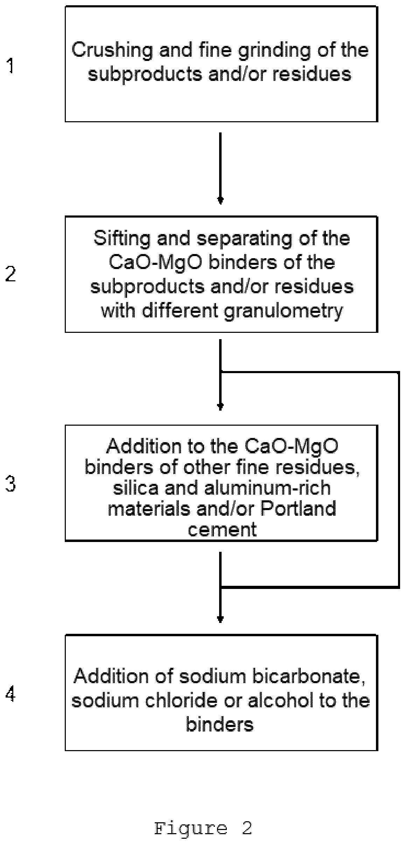

**Figure 2****:** Schematic representation of the process of obtaining CaO-MgO binders with reuse of subproducts and/or residues
   Wherein (1) represents the step of crushing and fine grinding of the subproducts and/or residues rich in calcium and magnesium.
   Wherein (2) represents the step of separation and sifting the ground particles (less than 250 µm) of the subproducts and/or residues.
   Wherein (3) represents the process of obtaining CaO-MgO binders additivated with other fine residues and rich in silica and aluminum materials and/or Portland cement.
   Wherein (4) represents the process of obtaining CaO-MgO binders additivated with sodium bicarbonate, sodium chloride or alcohol.

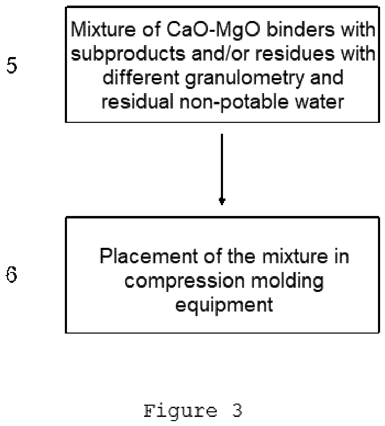

**Figure 3****:** Schematic representation of the procedures for obtaining different products (e.g. blocks, kerbstones, bricks) with different dosages/traces of mixtures.
   Wherein (5) represents a dosage and mixture of CaO-MgO binders (simples or additivated) with residues and/or subproducts with different granulometry, for different dosages/traces, and with non-potable water in varying amounts.
   Wherein (6) represents the process of compression molding of the mixture, for example, by vibro-compression, for obtaining a certain product.

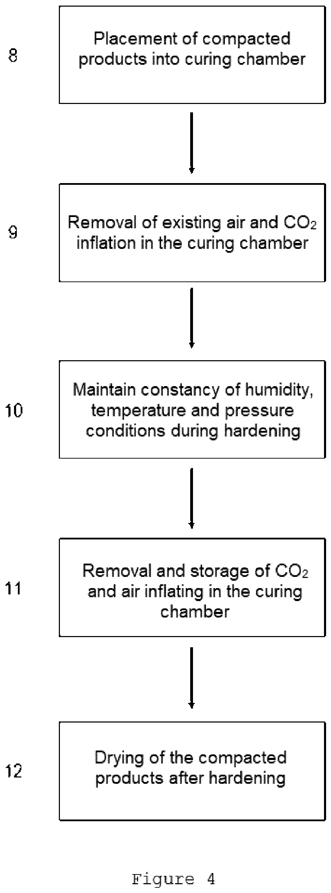

**Figure 4****:** Schematic representation of the curing and hardening system with recirculation of carbon dioxide.
   Wherein (8) represents the placement of compacted products into a curing chamber.
   Wherein (9) represents the step of removing the existing air and injecting carbon dioxide into the curing chamber.
   Wherein (10) represents maintaining the constancy of the humidity, temperature and pressure conditions, in the curing system, during the hardening time.
   Wherein (11) represents the step of removal and storage in a secondary reservoir of the carbon dioxide existing in the curing chamber and injection of outer air.
   Wherein (12) represents the step of drying the compacted product after hardening.

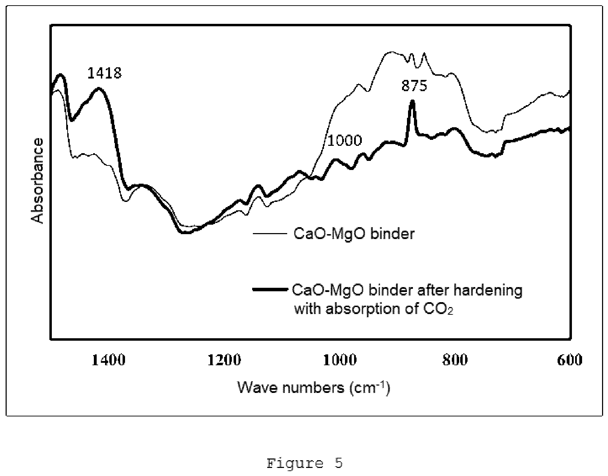

**Figure 5****:** Example of a typical result of the Fourier-transform infrared spectroscopy assay with attenuated total reflectance (FITR-ATR), relating to a sample of CaO-MgO binder, before and after the hardening by absorption of carbon dioxide. Wherein the absorbance peaks, relating from the C-O bonds, of the wave number 875 cm⁻¹ and of the interval of wave numbers between 1399-1418 cm⁻¹, show the formation of calcium carbonates (CaCO₃). And the absorbance peaks relating to the Si-O bonds, of the interval of wave numbers between 995-1000 cm⁻¹, show the formation of hydrated calcium silicates (C-S-H).

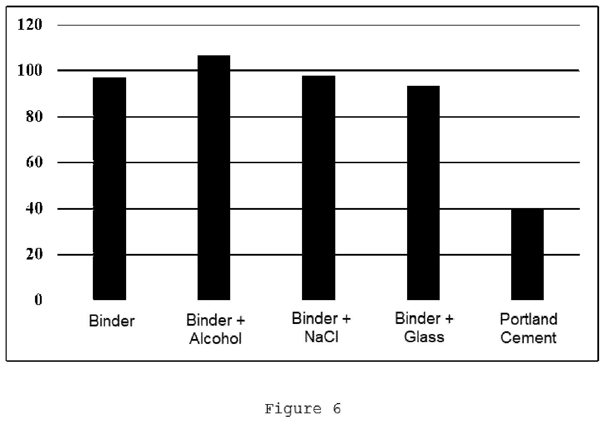

**Figure 6****:** Average results of compression resistance assays (presented in MPa) carried out on test bodies produced with mixtures of CaO-MgO binders and non-potable water, with different additives (alcohol, sodium chloride and crushed glass). Wherein the results with CaO-MgO binders (obtained in the following conditions: maximum diameter of the particles of CaO-MgO binder = 45 pm; non-potable water/CaO-MgO binder ratio = 0.1; Static compression pressure of 30 MPa, Curing and hardening temperature of 60°C; Carbon dioxide pressure of 2.5 Bar; Concentration of CO₂ = 100%; Hardening time = 24 hours; Dosage of alcohol = 10% substitution of non-potable water; NaCl content = 20 g/L; Dosage of crushed glass = 5% of the total mass of CaO-MgO binder) are compared with the average result of compression with equivalent mixture of Portland cement type I of class 32.5 (obtained in the following conditions: water/cement ratio = 0.45; Curing time = 28 days).

### Detailed description of the invention

The detailed process of obtaining binders and construction products with reuse of subproducts and/or residues, with absorption of carbon dioxide, consists of the steps and procedures set out ahead in subsections a) to g). The sequence of subsection a), b) or a), c) or a), d) constitutes the sequence of steps needed to obtain CaO-MgO binders and CaO-MgO binders with additives. The sequence of subsection e), f), g) constitutes the sequence of steps needed to obtain construction products with reuse of subproducts and/or residues, with absorption of carbon dioxide.
a) Crushing and fine grinding of the subproducts and/or residues and separation and sifting of the subproducts and/or residues with size less than 250µm for obtaining CaO-MgO simple binders;
   Initially, to obtain CaO-MgO binders the sub-product and/or residue (namely the sub-product and industrial residue), rich in calcium or magnesium, can be crushed and ground. The purpose of crushing and grinding is to make its particles finer, with a size less than 250µm, which may be separated by sifting to be used as binder, because being finer they have greater reactivity to the carbon dioxide, given their high specific surface. The processes of crushing, grinding or pulverization can be carried out with any equipment having such purpose. The portion of particles larger than 250µm will be used, subsequently, as aggregate of the mixtures to obtain products.
b) Addition of additives to the CaO-MgO binders, namely other fine residues and/or silica and aluminum-rich materials and/or Portland cement;
c) Addition of additives to the CaO-MgO binders, namely sodium bicarbonate, sodium chloride or alcohol;
d) Mixture of CaO-MgO binders with subproducts and/or residues with different granulometry and residual non-potable water.
   After grinding and sifting, the sub-product and/or residue that will be used as CaO-MgO binder, be it a single sub-product and/or residue, or mixture of subproducts and/or residues, can also be mixed with additives, with the objective of increasing the mechanical resistance of the end product. Preferably, the mixture of additives should be made directly with the binder prior to combining it with non-potable water, so as to increase the homogenous dispersion thereof in the mixture. Alternatively, additives can be combined after mixing the CaO-MgO binder with non-potable water.
   The additives can be fine residues and/or silica and aluminum-rich materials and/or Portland cement. The additives may also be sodium bicarbonate, sodium chloride or alcohol.
   The maximum percentage in mass of powder additives is 40% of the mass of the CaO-MgO binder in dry state, the recommended addition percentage being under 10% for improved performance in terms of mechanical resistance. The glass recycled from bottles, after fine grinding, is an example of an additive material, rich in silica and aluminum, which can be added to the binders.
   The maximum quantity of additives can also be determined by concentration of grams of additive per liter of non-potable water. In this case, the maximum dosage of sodium chloride should be less than 50g/L, the maximum dosage of sodium bicarbonate should be less than 10g/L, and the maximum dosage of alcohol should be less than 300g/L.
   To obtain construction products, which after molding harden with carbon dioxide, mixtures are produced with CaO-MgO binders (plain or with additives) and subproducts and/or residues, with different granulometry, and with residual non-potable water, in different dosages. The non-potable water may come from effluents of residues, domestic effluents that are impossible or unfeasible to treat, salt water (from the sea) or from polluted rivers that are impossible or unfeasible to treat to obtain potable water.
e) Placement of the mixture in compression molding equipment for obtaining a certain construction product.
   After completing the mixtures from pre-determined traces depending on the end product, the mixtures should be molded and compacted to obtain products with a certain shape, with compression pressure, vibro-compression or, with a minimum value of 10 MPa of pressure, the value of 25 MPa being recommended as most efficient compression pressure.
f) Placement of the compacted product in a curing and hardening process in a system with recirculation of carbon dioxide, under constant humidity, temperature and pressure conditions.
   The curing and hardening of the compacted products is carried out in a closed circuit with recirculation of carbon dioxide, under constant humidity, temperature and pressure conditions. Soon after placing the compacted products inside the curing chamber, the existing air will be withdrawn and carbon dioxide inflated into the inside. Initially, carbon dioxide from the secondary reservoir of the circuit will be inflated until an equilibrium pressure between 0.5 and 1 bar is attained. Thereafter, carbon dioxide coming from the main reservoir will be inflated, keeping a constant pressure, throughout the hardening period, between 0.5 and 2.5 bar, so as to maximize the absorption of carbon dioxide by the compacted products. Besides the constant pressure, throughout the curing and hardening period, humidity and temperature conditions will be kept constant inside the curing chamber, namely relative humidity between 40-100%, preferably 70%; and air temperature between 30 and 70° Celsius, preferably 60° Celsius. Once the curing period has finished, the carbon dioxide existing in the curing chamber will be removed, by suction system, to inside the secondary reservoir. And, subsequently, the air from the atmospheric environment will be inflated to inside the curing chamber, until an equilibrium pressure between 0.5 and 1 bar is attained again. Under these conditions, the hardened products are withdrawn from inside the curing chamber.
g) Drying the compacted product after hardening.

After curing and hardening, the products undergo a drying process, in a ventilated environment, with drying temperatures between 30 and 70° Celsius, for a minimum period of 12 hours, so as to obtain increased resistance to compression.

### Examples of application

The process of obtaining binders and construction products with reuse of subproducts and/or residues that harden with the absorption of carbon dioxide can be applied through the cement and concrete articles industry, and construction and structural elements, partially or fully replacing them, such as, for example, in the industry of street furniture, artifacts made of pre-stressed elements (pre-stressed beams, power poles), heavy prefabrication (such as architectural panels, galleries, boxes), building blocks (structural blocks, light blocks, thermal blocks), fungiform formwork blocks and flooring blocks, kerbstones, bricks and pavements, sanitation and boxes, and others.

Preferably, this process can be applied in the artifacts industry and pre-fabricated constructive elements produced by vibro-compression, such as blocks, kerbstones, tubes, bricks and pavements.

Put otherwise, this process is susceptible to be implemented in any industry of artifacts and constructive elements of cement and pre-fabrication produced by vibro-compression, simply by replacing the mixtures of cement, natural aggregates and water, by mixture of subproducts and/or residues and residual non-potable water and adapting the humid curing chambers existing in this type of industry, by chambers with recirculation of carbon dioxide in a closed circuit, with controlled temperature, humidity and pressure.

The binders and products obtained with this technology has mechanical resistance and superior fire resistance to equivalent construction products obtained with Portland cement. Additionally, the time needed for total hardening of the products obtained, is ten times lower than the time required for hardening equivalent construction products produced with Portland cement. Therefore, this technology is also useful for accelerating the process of production of construction materials.

### Bibliographic References

Humbert, P. S., & Castro-Gomes, J. P. (2018). Aglomerante livre de cimento ativado por dioxido de carbono. In CLB-MCS 2018 - 3o Congresso Luso-Brasileiro Materiais de Construção Sustentáveis Coimbra, February 14-16 (pp. 14-16).

Shao, Y., Mahoutian, M., & Ghouleh, Z. (2017). Carbonate-bonded construction products from steel-making residues and method for making the same. US2017/0073270A1. United States.

## Claims

1. A process of obtaining CaO-MgO binders and construction products with reuse of subproducts and/or residues **characterized in that** the curing and hardening process is done with absorption of carbon dioxide.

2. The process of obtaining CaO-MgO binders and construction products with reuse of subproducts and/or residues, according to claim 1, **characterized in that** the subproducts and/or residues are rich in calcium and magnesium.

3. The process of obtaining CaO-MgO binders and construction products with reuse of subproducts and/or residues, according to the preceding claims, **characterized in that** the curing and hardening is done in ambient conditions of constant humidity, temperature and pressure.

4. The process of obtaining CaO-MgO binders and construction products with reuse of subproducts and/or residues, according to claims 1 and 2, **characterized in that** the binders are obtained by crushing and grinding.

5. The process of obtaining CaO-MgO binders and construction products with reuse of subproducts and/or residues, according to the preceding claims, **characterized in that** these products are obtained by mixing the binders with subproducts and/or residues having different granulometry.

6. The process of obtaining CaO-MgO binders and construction products with reuse of subproducts and/or residues, according to the preceding claims, **characterized in that** these products are obtained by mixing with residual non-potable water.

7. The process of obtaining CaO-MgO binders and construction products with reuse of subproducts and/or residues, according to the preceding claims, **characterized in that** these products may include additives such as alcohol, sodium chloride and sodium bicarbonate in the mixture.

8. The process of obtaining CaO-MgO binders and construction products with reuse of subproducts and/or residues, according to the preceding claims, **characterized in that** the construction products may include other residues and materials containing silica and aluminum.

9. The process of obtaining CaO-MgO binders and construction products with reuse of subproducts and/or residues, according to the preceding claims, **characterized in that** the construction products are obtained by compression molding.

10. The process of obtaining CaO-MgO binders and construction products with reuse of subproducts and/or residues, according to the preceding claims, **characterized in that** the curing and hardening process is done with a system of recirculation of carbon dioxide in a closed circuit.

11. The process of obtaining CaO-MgO binders and construction products with reuse of subproducts and/or residues, according to the preceding claims, wherein the process of producing CaO-MgO binders is **characterized by** the following steps:
a) Crushing and fine grinding of the subproducts and/or residues;
b) Separation and sifting of the subproducts and/or residues with a size less than 250µm;
c) Addition to the CaO-MgO binders of other fine residues, silica and aluminum-rich materials and/or Portland cement;
d) Addition of sodium bicarbonate, sodium chloride or alcohol to the CaO-MgO binders.

12. The process of obtaining CaO-MgO binders and construction products with reuse of subproducts and/or residues, according to the preceding claims, wherein the process of producing construction products is **characterized by** the following steps:
a) Mixture of CaO-MgO binders, with additives, with subproducts and/or residues with different granulometry, and with residual non-potable water;
b) Placement of the mixture in compression molding equipment for obtaining products with a certain shape;
c) Placement of the compacted products in a curing and hardening system with recirculation of carbon dioxide, under constant humidity, temperature and pressure conditions;
d) Drying of the compacted products after hardening.
